# EUROPEAN PATENT SPECIFICATION

(11) **EP 2 657 888 B1**
(45) Date of publication and mention of the grant of the patent: **12.02.2020**
(21) Application number: 10860934.8
(22) Date of filing: 22.12.2010
(51) Int. Cl.: G06K 17/00, G07D 9/00, G07F 7/12

(54) **APPARATUS FOR READING MAGNETIC RECORDING MEDIUM**
VORRICHTUNG ZUM LESEN MAGNETISCHER AUFZEICHNUNGSMEDIEN
APPAREIL DE LECTURE DE SUPPORT D'ENREGISTREMENT MAGNÉTIQUE

(43) Date of publication of application: 30.10.2013
(73) Proprietor: Hitachi-Omron Terminal Solutions, Corp., Tokyo 141-8576 (JP)
(72) Inventor: KIMURA, Tomoya, Tokyo 141-8576 (JP); SUZUKI, Tadamichi, Tokyo 100-8220 (JP); TADAMASA, Akihiro, Tokyo 100-8220 (JP); SUZUKI, Hiroyuki, Tokyo 100-8220 (JP)
(74) Representative: MERH-IP Matias Erny Reichl Hoffmann Patentanwälte PartG mbB
(86) International application number: PCT/JP2010/007428
(87) International publication number: WO 2012/085967

(56) References cited:
- EP-A2- 1 067 474
- WO-A1-2007/048649
- WO-A1-2010/000004
- DE-A1-102009 019 708
- DE-A1-102010 000 102
- JP-A- 2007 164 533
- JP-B2- 3 936 496

## Description

### Technical Field

The present invention relates to a device for reading data recorded in a magnetic recording medium and, more particularly, to a magnetic recording medium reading device having the function of preventing illegal data acquisition.

### Background Art

In a transaction processing device such as an ATM (Automated Teller Machine) or a CD (Cash Dispenser), a card reader for reading a magnetic card is installed. In such a transaction processing device, recently, a crime called skimming of illegally obtaining data recorded in a magnetic stripe of a card when the magnetic card is inserted in a card reader occurs.

There are roughly two types in skimming. One of them (hereinbelow, called "first type") is that an illegal reader having a magnetic head is installed so as to cover a card insertion port of a card reader of an ATM or a CD, and data of a magnetic card inserted in the card reader is illegally obtained by the magnetic head of the illegal reader. The other type (hereinbelow, called "second type") is that an illegal reader is connected to a magnetic stripe detector including a magnetic head for detecting a magnetic stripe installed near a card insertion port via a lead wire, and a signal output from the magnetic stripe detector (data read by the magnetic head) is illegally obtained via the lead wire.

Various measures against such skimming have been proposed. For example, the following Patent Literature 1 describes a card reader having an interfering magnetic field generator provided near a card insertion port. In the card reader, an interfering magnetic field is generated in an outside region of the card insertion port by the interfering magnetic field generator. Consequently, even if an illegal reader is attached to the outside of a card insertion port, data read by the illegal reader is data different from original data recorded in a card under the influence of the interfering magnetic field. In such a manner, data of a card can be prevented from being illegally taken.

In addition, the following Patent Literature 2 describes a card reader in which a loop antenna for generating an interfering magnetic field is disposed around a card insertion port. The antenna face of the loop antenna is parallel to the front face of the card insertion port. Also in the card reader, an interfering magnetic field is generated' in an outside region of the card insertion port. Therefore, even if an illegal reader is attached to the outside of the card insertion port, data of a card can be prevented from being illegally taken.

Further, the following Patent Literature 3 describes a card reader having a pre-head for detecting a magnetic stripe of a card, which is disposed near a card insertion port, and outputting a signal different from that of magnetic information recorded in the magnetic stripe therefrom. In the card reader, even if an illegal reader is attached to the pre-head via a lead wire, a signal output from the pre-head is a signal different from that of information recorded in a card, so that data of a card can be prevented from being illegally taken.

DE 10 2009 019 708 A1 describes a device for the protection of a card reader which generates a magnetic or electric or electromagnetic field for disturbing devices which are intended for illegally obtaining data. The amplitude, phase, frequency and/or spacial or time distribution of the field is generated coincidentally so that the device for illegally obtaining data is not able to identify and predict the magnetic or electric or electromagnetic field for disturbing the devices intended for illegally obtaining data, so that it can be prevented that the device intended for illegally obtaining data is able to compensate or filter the field for disturbing in such a way that the device intended for illegally obtaining data it is still able to illegally obtain card data regardless of the disturbing signal.

WO 2007/048649 A1 describes a protection device for generating an electromagnetic protection field which can impair the functionality of devices intended for illegally obtaining data. The protection field is modified by a control unit during the time in which the card is read in the card reading device in such a way that the reading of the card in the card reading device is not impaired. The protection device also includes a metal detector in order to detect devices intended for illegally obtaining data.

### Citation List

### Patent Literatures

Patent Literature 1: Japanese Laid-Open Patent Publication No. 2001-67524
Patent Literature 2: Japanese Patent No. 4425674
Patent Literature 3: Japanese Laid-Open Patent Publication No. 2010-205187

### Summary of Invention

### Technical Problems

The card reader described in Patent Literature 1 is effective against skimming of the first type of attaching an illegal reader to the outside of a card insertion port since an interfering magnetic field is generated in the outside region of the card insertion port. In the card reader, however, in the case where the skimming of the second type of attaching an illegal reader to a magnetic stripe detector via a lead wire is performed, there is the possibility that data is illegally taken.

The card reader described in Patent Literature 2 is also effective against the skimming of the first type since an interfering magnetic field is generated in the outside region of a card insertion port. However, the card reader is not provided with a magnetic head for detecting a magnetic stripe, and a measure against the skimming of the second type is not considered.

The card reader of Patent Literature 3 is effective against the skimming of the second type since a signal which is output from the pre-head is a signal different from that of information recorded in a card. In the card reader, however, signal converting means for converting a signal read by the head of the pre-head to a signal different from the read signal is necessary, and the configuration is therefore complicated. Moreover, since a measure against the skimming of the first type is not taken, data may be illegally taken by an illegal reader attached to the outside of a card insertion port.

An object of the present invention is therefore to provide a magnetic recording medium reading device capable of effectively preventing illegal data acquisition, particularly, against skimming of the second type. Another object of the present invention is to provide a magnetic recording medium reading device that is also effective against skimming of the first type.

### Solution to Problems

The present invention is defined by a magnetic recording medium reading device according to claim 1.

In such a manner, even if an illegal reader is attached to the magnetic stripe detecting unit via a lead wire, a signal output from the magnetic stripe detecting unit is a signal by which only determination of the existence of data in the magnetic stripe can be performed, but is not a signal by which the data recorded in the magnetic stripe can be completely reproduced. Consequently, illegal data acquisition by the skimming of the second type can be prevented. In addition, by making the interfering magnetic field generated by the magnetic field generating unit acted also on the outside of the insertion port, illegal data acquisition by skimming of the first type can be also prevented.

In the present invention, the magnetic field generating unit may be provided closer to the insertion port side than the magnetic head in an insertion direction of the magnetic recording medium.

### Advantageous Effects of Invention

According to the present invention, even if an illegal reader is attached to the magnetic stripe detecting unit via a lead wire, illegal data acquisition can be effectively prevented. In addition, since the interfering magnetic field acts also on the outside of the insertion port, also in the case where an illegal reader is attached to the outside of the insertion port, illegal data acquisition can be prevented.

### Brief Description of Drawings

Fig. 1 is a block diagram illustrating an electrical configuration of a card reader according to an embodiment of the present invention;
Figs. 2a to 2d are a side cross section and front views of the card reader;
Fig. 3 is a plan view of a magnetic card;
Fig. 4 is a flowchart illustrating operations at the time of card insertion in the card reader;
Fig. 5 is a flowchart illustrating operations at the time of returning a card in the card reader;
Fig. 6 is a waveform chart for describing a first embodiment;
Figs. 7a to 7c are waveform charts for describing a second embodiment;
Figs. 8a and 8b are waveform charts for describing a third embodiment;
Figs. 9a and 9b are waveform charts for describing a fourth embodiment;
Fig. 10 is a flowchart for describing the operations of the fourth embodiment;
Figs. 11a to 11c are diagrams illustrating frequency spectra and a filter characteristic for describing the fifth embodiment;
Figs. 12a to 12c are waveform charts expressing an interfering magnetic field, a magnetic stripe detection signal, and a synthesized signal of them; and
Figs. 13a to 13c are waveform charts for describing a sixth embodiment.

### Description of Embodiments

Hereinafter, embodiments of the present invention will be described with reference to the drawings.

### (First Embodiment)

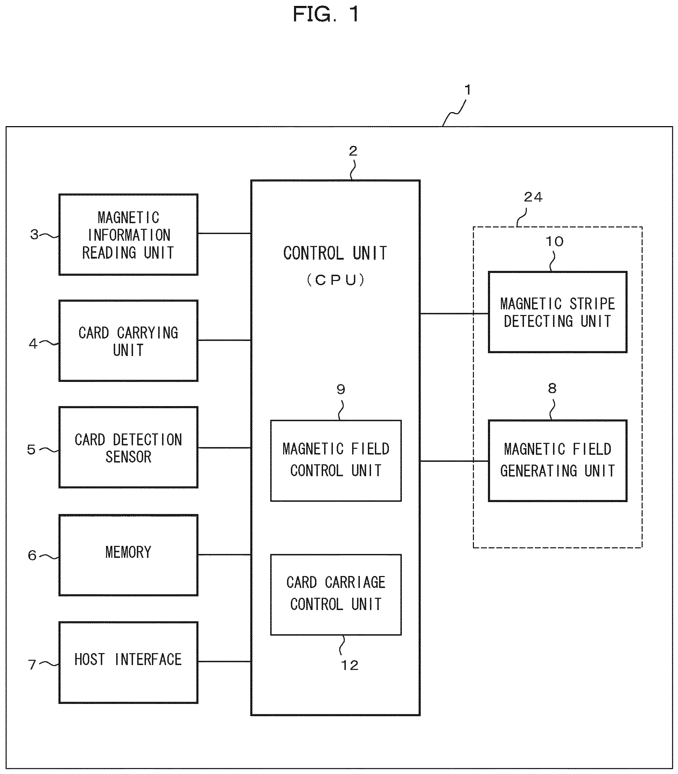

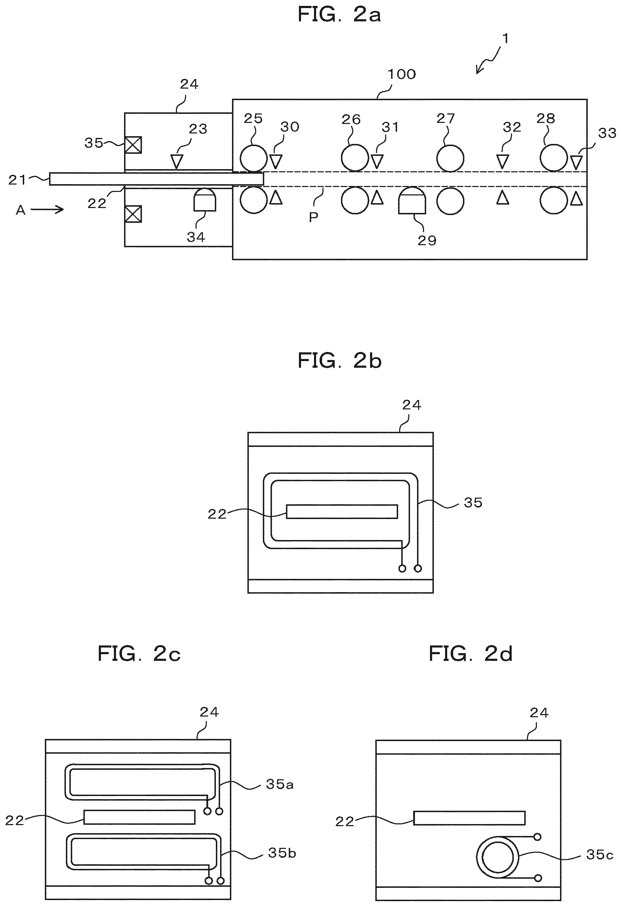

First, a configuration of a card reader according to a first embodiment will be described with reference to Fig. 1 and Figs. 2a to 2d.

As illustrated in Fig. 1, a card reader 1 according to the present embodiment has a control unit 2 including a CPU for controlling the operations of the entire device, a magnetic information reading unit 3 for reading magnetic data recorded in a magnetic card, a card carrying unit 4 for carrying a magnetic card, a card detection sensor 5 for detecting a magnetic card, a memory 6 for storing magnetic data read by the magnetic information reading unit 3, a host interface 7 as a connection with a host device (for example, ATM), a magnetic stripe detecting unit 10 for detecting a magnetic stripe of a magnetic card, and a magnetic field generating unit 8 for generating an interfering magnetic field to prevent reading of data recorded in the magnetic stripe.

The control unit 2 includes a magnetic field control unit 9 for controlling the magnetic field generating unit 8 and a card carriage control unit 12 for controlling the card carrying unit 4. The magnetic stripe detecting unit 10 and the magnetic field generating unit 8 are disposed in a card insertion port unit 24. The magnetic stripe detecting unit 10 includes a magnetic head 34 (Fig. 2a) which will be described later. The magnetic field generating unit 8 includes a loop antenna 35 (Fig. 2b) which will be described later.

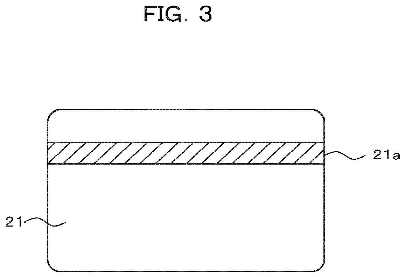

As illustrated in Fig. 2a, the card insertion port unit 24 is provided in the front face of a casing 100 of the card reader 1. In the card insertion port unit 24, an insertion port 22 in which a magnetic card (hereinbelow, simply called a "card") 21 is to be inserted is formed. As illustrated in Fig. 3, the card 21 has a magnetic stripe 21a. Fig. 3 is a rear view of the card 21. Near the insertion port 22, a card insertion detection sensor 23 for detecting the card 21 inserted is provided. The card insertion detection sensor 23 is a pressure sensor and disposed in a position where it is pressed by the card 21 inserted through the insertion port 22. The magnetic head 34 for detecting a magnetic stripe is also provided near the insertion port 22. The magnetic head 34 detects the magnetic stripe 21a of the card 21.

In the casing 100 of the card reader 1, carrier rollers 25 to 28, card position detection sensors 30 to 33, and a magnetic head 29 are provided. Each of the carrier rollers 25 to 28 consists of a pair of rollers disposed on the upper and lower sides of a carrier path P, and the card 21 is carried while being sandwiched by the pair of rollers. The carrier rollers 25 to 28 are coupled to a motor (not illustrated) via a carrier belt (not illustrated) . One of a pair of carrier rollers is a drive roller to which the rotational force of the motor is transmitted, and the other roller is a driven roller which rotates in accordance with the drive roller. The carrier rollers 25 to 28 construct the card carrying unit 4 (Fig. 1) together with the carrier belt and the motor.

Each of the card position detection sensors 30 to 33 is an optical sensor of the transmission type and has a light emitting unit and a light receiving unit which are opposed to each other across the carrier path P. The arrangement interval of the sensors 30 to 33 is shorter than the length in the carriage direction of the magnetic card 21. The sensor 30 detects that the card 21 is sandwiched by the carrier rollers 25 which are closest to the insertion port 22. The sensor 33 detects that the inserted card 21 reaches a storage part (not illustrated) temporarily storing a card. The sensors 31 and 32 detect the position of the card 21 being carried. The card position detection sensors 30 to 33 construct the card detection sensor 5 (Fig. 1) together with the card insertion detection sensor 23.

The magnetic head 29 is provided on the lower side of the carrier path P between the carrier rollers 26 and the carrier rollers 27. The magnetic head 29 reads data recorded in the magnetic stripe 21a of the card 21 in the process of carriage of the inserted card 21 in the carrier path P. The magnetic head 34 is a magnetic head for detecting the existence of data recorded in a magnetic stripe whereas the magnetic head 29 is a magnetic head for reproducing data itself recorded in the magnetic stripe. The interval between the magnetic head 29 and the sensor 33 is slightly longer than the length in the carriage direction of the card 21. Therefore, when the card 21 reaches the storage part, that is, when the front end of the card 21 reaches the position of the sensor 33, the magnetic head 29 completes reading of the data recorded in the card 21.

The loop antenna 35 is provided near the front face of the card insertion port unit 24. As understood from Fig. 2a, the loop antenna 35 is provided closer to the insertion port 22 side than the magnetic head 34 for detecting a magnetic stripe in the insertion direction A of the card 21 near the insertion port 22. The loop antenna 35 is an antenna obtained by winding a conductor once or a plurality of times in a loop shape and is disposed so as to surround the insertion port 22 as illustrated in Fig. 2b.

When drive current flows in the loop antenna 35 in the magnetic field generating unit 8 based on control of the magnetic field control unit 9, the loop antenna 35 generates a magnetic field around the insertion port 22. The magnetic field acts as an interfering magnetic field on the magnetic head 34 for detecting a magnetic stripe on the rear side of the insertion port 22 and disturbs reading of magnetic information in the magnetic head 34. In addition, the magnetic field is generated also on the outside (front side) of the insertion port 22 and, in the case where an illegal reader (not illustrated) is attached to the outside of the insertion port 22, disturbs reading of magnetic information by the illegal reader.

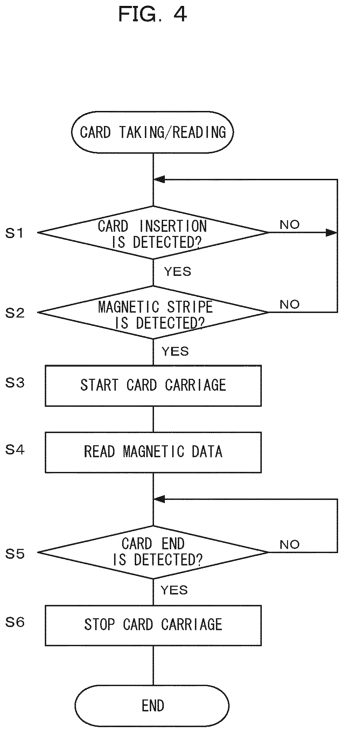

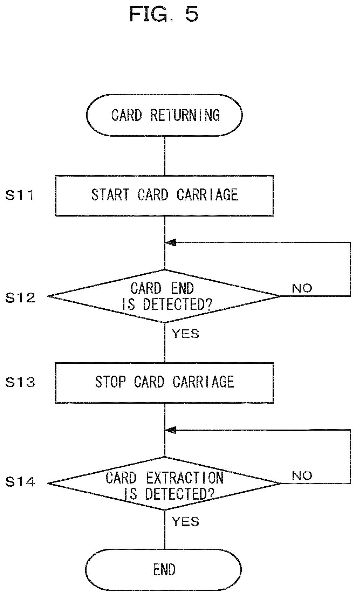

Next, the basic operation of the card reader 1 having the above configuration will be described with reference to flowcharts of Figs. 4 and 5.

Fig. 4 illustrates the procedure in the case of taking and reading the card 21 at the time of card insertion. The process in each of steps is executed by the control unit 2. It is assumed that the loop antenna 35 generates an interfering magnetic field also in a state where the card 21 is not inserted in the insertion port 22.

First, the control unit 2 determines whether or not insertion of the card 21 is detected by the card insertion detection sensor 23 (step S1). When insertion of the card 21 is not detected (NO in step S1), the control unit 2 repeatedly executes the step S1 and waits until insertion of the card 21 is detected. When insertion of the card 21 is detected (YES in step S1), the control unit 2 determines whether or not a magnetic stripe is detected by the magnetic stripe detecting unit 10, that is, whether or not magnetic data is read from the magnetic stripe 21a of the card 21 by the magnetic head 34 for detecting a magnetic stripe (step S2). When the magnetic stripe is not detected (NO in step S2), the control unit 2 determines that the card 21 is not a magnetic card or is a magnetic card in which no data is recorded in a magnetic stripe, and returns to step S1.

When a magnetic stripe is detected (YES in step S2), the control unit 2 determines that the card 21 in which magnetic data is recorded is inserted, and rotates the carrier rollers 25 to 28 by the card carriage control unit 12 to start carriage of the card 21 (step S3). At this time, the carrier rollers 25 to 28 rotate in the direction of taking the inserted card 21 into the casing 100 (hereinbelow, called a "forward direction"). Thus, the card 21 passes through the carrier path P and is taken in the casing 100. In the process of carrying the card 21 in the carrier path P, magnetic data recorded in the magnetic stripe 21a of the card 21 is read by the magnetic head 29 (step S4).

Subsequently, the control unit 2 determines whether or not the sensor 33 disposed next to the carrier roller 28 detects the end (the right end in Fig. 2a) of the card 21 (step S5). When the sensor 33 does not detect the card end (NO in step S5), the control unit 2 repeatedly executes the step S5. Specifically, the control unit 2 rotates the carrier rollers 25 to 28 in the forward direction and continues carriage of the card 21 until the card end is detected. When the sensor 33 detects the card end (YES in step S5), the control unit 2 determines that the carried card 21 reaches the rear end of the carrier path P and stops the rotation of the carrier rollers 25 to 28 by the card carriage control unit 12 to stop the carriage of the card 21 (step S6). At this time, the card 21 is temporarily stored in the storage part (not illustrated). Thus, the series of all of processes of Fig. 4 is finished.

Fig. 5 illustrates the procedure of the case of returning the card 21. The process in each of steps is executed by the control unit 2.

First, the control unit 2 rotates the carrier rollers 25 to 28 by the card carriage control unit 12 to start carriage of the card 21 (step S11). At this time, the carriage rollers 25 to 28 rotate in the direction of carrying the inserted card 21 from the storage part to the insertion port 22 (hereinbelow, called a "reverse direction"). Consequently, the card 21 is carried in the carrier path P toward the insertion port 22. At this time as well, the interfering magnetic field is generated by the loop antenna 35.

Subsequently, the control unit 2 determines whether or not the sensor 30 disposed next to the carrier roller 25 detects the end (the right end in Fig. 2a) of the card 21 (step S12). When the sensor 30 does not detect the card end (NO in step S12), the control unit 2 repeatedly executes the step S12. Specifically, the control unit 2 rotates the carrier rollers 25 to 28 in the reverse direction and continues carriage of the card 21 until the card end is detected.

When the sensor 30 detects the card end (YES in step S12), the control unit 2 determines that the carried card 21 is returned to the insertion port 22 and stops the rotation of the carrier rollers 25 to 28 by the card carriage control unit 12 to cease carrying the card 21 (step S13). At this time, as illustrated in Fig. 2a, the card 21 is sandwiched by the upper and lower carrier rollers 25, and the end portion of the card projects to the outside from the insertion port 22. Consequently, a user can hold the end portion of the card 21 projected from the insertion port 22 and pull the card 21 out.

Then the control unit 2 determines whether or not the extraction of the card 21 is detected by the card insertion detection sensor 23 (step S14). In a state where the card insertion detection sensor 23 detects the card, the control unit 2 determines that the card 21 is not pulled out (NO in step S14), repeatedly executes the step S14, and waits until the card 21 is pulled out. When the card insertion detection sensor 23 changes from the card detection state to a state where the card is not detected, the control unit 2 determines that the card 21 is pulled out (YES in step S14) and finishes the process. Thus, the series of all of processes in Fig. 5 is finished.

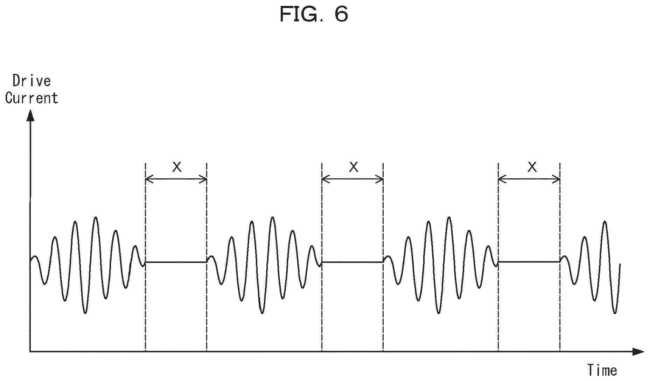

Next, a skimming measure as a feature of the present invention will be described. Fig. 6 is a timing chart of magnetic stripe detection executed in step S2 in the flowchart of Fig. 4. In the present embodiment, a pause period X is provided in the interfering magnetic field generated by the magnetic field generating unit 8, and data of the magnetic stripe is read in the pause period X.

Concretely, based on control of the magnetic field control unit 9, drive current as illustrated in Fig. 6 is passed through the loop antenna 35. The drive current is an alternating current signal having a predetermined oscillation frequency and the pause period X in which oscillation stops periodically. Consequently, the interfering magnetic field is generated intermittently from the loop antenna 35. In the pause period X, the magnetic stripe detecting unit 10 reads data recorded in the magnetic stripe 21a of the card 21 by the magnetic head 34 and outputs the result as a magnetic stripe detection signal.

Since the interfering magnetic field acts on the magnetic head 34 for detecting a magnetic stripe while the interfering magnetic field is generated by the loop antenna 35, the magnetic head 34 cannot read magnetic data of the card 21. Therefore, even if the skimming of the second type of coupling a lead wire to the output terminal of the magnetic stripe detecting unit 10 and reading magnetic data of the card 21 by an illegal reader via the lead wire is performed, the magnetic data of the card 21 cannot be taken in the interfering magnetic field generation periods (the periods other than X).

On the other hand, in the interfering magnetic field pause period X, in the case where the skimming of the second type is performed, the magnetic data of the card 21 can be read by an illegal reader. However, since the pause period X is actually an extremely short time, data read by the illegal reader during the period is just a piece of the magnetic data of the card 21. Consequently, the original data recorded in the magnetic stripe 21a of the card 21 cannot be restored from the data read by the illegal reader.

Moreover, the data read from the magnetic stripe 21a by the magnetic head 34 in the pause period X is also a very small part of the magnetic data of the card 21. However, the magnetic head 34 is a magnetic head for detecting a magnetic stripe but is not a magnetic head for reproducing magnetic data, so that it is sufficient to detect whether or not magnetic data is recorded in the magnetic stripe 21a. Therefore, even if the data read by the magnetic head 34 in the pause period X is a part of the original data, there is no problem in determination of the existence of data in the magnetic stripe 21a.

As described above, in the first embodiment, the interfering magnetic field generated by the loop antenna 35 is acted on the magnetic head 34 for detecting a magnetic stripe, and data in the magnetic stripe 21a of the card 21 is read by the magnetic head 34 during the interfering magnetic field pause period. Consequently, even if an illegal reader is attached to the output terminal of the magnetic stripe detecting unit 10 via a lead wire, a signal output from the magnetic stripe detecting unit 10 during the pause period X is a signal (a part of original data) by which only determination of the existence of data in the magnetic stripe 21a can be performed but is not a signal by which the data recorded in the magnetic stripe 21a can be completely reproduced. Therefore, illegal data acquisition by the skimming of the second type can be prevented. By making the interfering magnetic field of the loop antenna 35 act also on the outside of the insertion port 22, illegal data acquisition by the skimming of the first type of attaching an illegal reader to the outside of the insertion port 22 can be also prevented.

Moreover, since the loop antenna 35 is provided closer to the insertion port 22 side than the magnetic head 34 in the insertion direction A of the card 21, magnetic data of the card 21 is not read by the magnetic head 34 before the interfering magnetic field acts. Thus, the illegal data acquisition by the skimming of the second type can be prevented more effectively.

### (Second example)

Next, a second example will be described. Note that, a configuration of a card reader in the second example is the same as that in Fig. 1 and Figs. 2a to 2d, and therefore, the description thereof will not be given. Also, the basic operation of the card reader is the same as that of Figs. 4 and 5, and therefore, the description thereof will not be given.

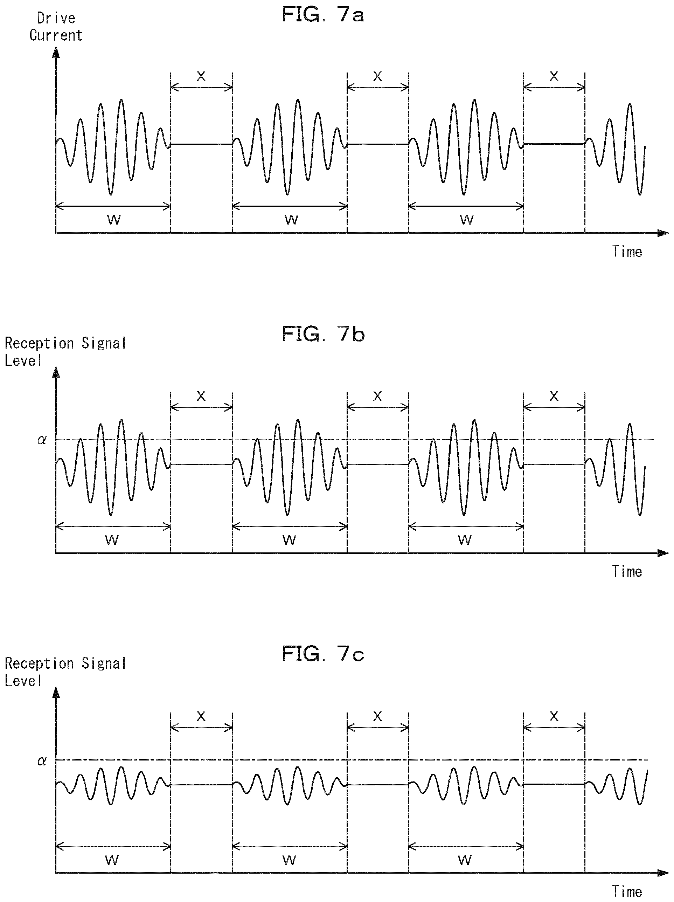

Figs. 7a to 7c are timing charts of magnetic stripe detection executed in step S2 in the flowchart of Fig. 4. In the foregoing first embodiment, the magnetic head 34 performs the reading operation only during the pause periods X of the interfering magnetic field. In the second example the magnetic head 34 performs the reading operation also in the periods other than the pause periods X.

Concretely, based on control of the magnetic field control unit 9, the drive current as illustrated in Fig. 7a is passed through the loop antenna 35. The drive current is the same as the drive current (Fig. 6) in the first embodiment. In the pause periods X of the interfering magnetic field, then, the magnetic stripe detecting unit 10 reads data recorded in the magnetic stripe 21a of the card 21 by the magnetic head 34 and outputs the result as a magnetic stripe detection signal.

On the other hand, also in interfering magnetic field generation periods W (periods other than X), the magnetic head 34 continues the reading operation. Consequently, a reception signal of a level according to the intensity of the magnetic field received by the magnetic head 34 is output from the magnetic stripe detecting unit 10. Then, in the periods W, the control unit 2 determines whether or not the interfering magnetic field generated by the loop antenna 35 is normally received by the magnetic head 34 based on the level of the reception signal output from the magnetic stripe detecting unit 10.

In this case, as illustrated in Figs. 7b and 7c, a reference level α is set for the reception signal level. Then, as illustrated in Fig. 7b, in the case where the reception signal level is equal to or higher than α, the control unit 2 determines that the interfering magnetic field is normally received by the magnetic head 34. On the other hand, as illustrated in Fig. 7c, in the case where the reception signal level is less than α, the control unit 2 determines that the interfering magnetic field is not normally received by the magnetic head 34 and something abnormal occurs in the magnetic field generating unit 8 or the magnetic field control unit 9. The control unit 2 then transmits an alarm signal to a host device (not illustrated) via the host interface 7 (Fig. 1). The host device receives the alarm signal and performs a predetermined process such as display of abnormality occurrence.

As described above, in the second example, by making the interfering magnetic field acted on the magnetic head 34 and reading data of the card 21 by the magnetic head 34 during the interfering magnetic field pause period, a measure against skimming similar to that of the first embodiment can be performed. Further, by monitoring the level of an output signal of the magnetic stripe detecting unit 10 during the periods other than the pause periods, the quality of the reception state of the interfering magnetic field in the magnetic head 34 can be determined.

### (Third example)

Next, a third example will be described. Note that, a configuration of a card reader in the third example is the same as that in Fig. 1 and Figs. 2a to 2d, and therefore, the description thereof will not be given. Also, the basic operation of the card reader is the same as that of Figs. 4 and 5, and therefore, the description thereof will not be given.

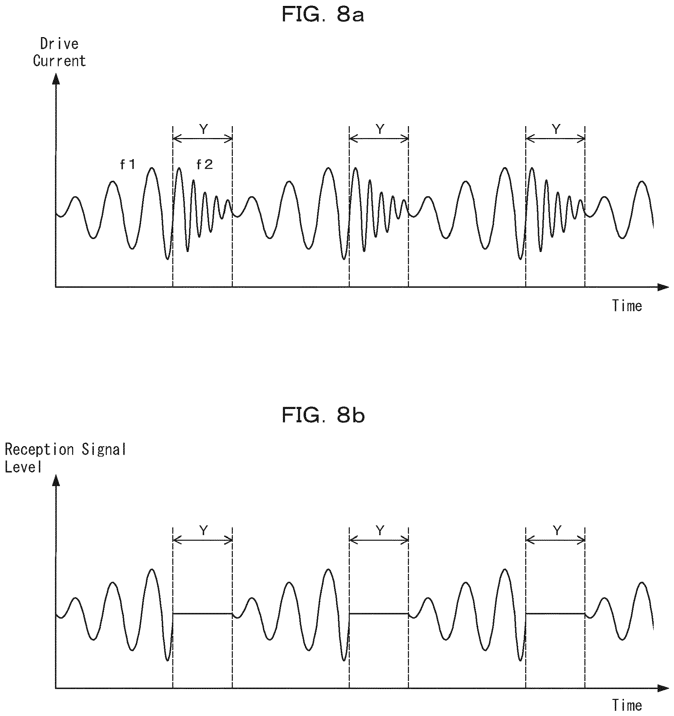

Figs. 8a and 8b are timing charts of magnetic stripe detection executed in step S2 in the flowchart of Fig. 4. Although the pause periods X are provided for the interfering magnetic field in the foregoing first embodiment, in the third example, periods Y in which the frequency changes are provided for the interfering magnetic field.

Concretely, based on control of the magnetic field control unit 9, drive current as illustrated in Fig. 8a is passed through the loop antenna 35. The drive current is an alternating current signal having a predetermined oscillation frequency and the period Y in which the frequency changes periodically (hereinbelow, called "frequency change period") . That is, in the periods other than Y, the frequency of the drive current is f1 (first frequency) . In the frequency change period Y, the frequency of the drive current changes from f1 to f2 (second frequency) . Although f1 < f2 is satisfied here, f1 > f2 is also possible.

In the frequency change period Y, the magnetic stripe detecting unit 10 reads data recorded in the magnetic stripe 21a of the card 21 by the magnetic head 34. The magnetic stripe detecting unit 10 performs a filtering process for eliminating the signal having the frequency f2 on the read data and outputs a signal after the filtering as a magnetic stripe detection signal. As a result, from the magnetic stripe detecting unit 10, a signal obtained by eliminating the signal having the frequency f2 in the frequency change period Y as illustrated in Fig. 8b is output.

In the present example, the interfering magnetic field generated by the loop antenna 35 always acts on the magnetic head 34. Consequently, even if the skimming of the second type of coupling a lead wire to the output terminal of the magnetic stripe detecting unit 10 and reading magnetic data of the card 21 by an illegal reader via the lead wire is performed, the magnetic data of the card 21 cannot be taken.

On the other hand, in the frequency change periods Y in which the frequency of the interfering magnetic field changes, a signal output from the magnetic stripe detecting unit 10 becomes different from that of the original data recorded in the card 21 by the filtering process. As described above, however, it is sufficient that the magnetic head 34 can detect the existence of magnetic data in the magnetic stripe 21a and it is unnecessary to reproduce the magnetic data. Further, when magnetic data is recorded in the magnetic stripe 21a, the magnetic head 34 reads the data. As a result, a signal which does not include the frequency f2 is output from the magnetic stripe detecting unit 10 in the frequency change period Y, so that the existence of magnetic data can be determined by the signal. Since the signal is a signal by which only determination of the existence of data in the magnetic stripe 21a can be performed, even if the signal is read in the frequency change period Y by the skimming of the second type, the original data cannot be reproduced.

As described above, in the third example, by making the interfering magnetic field acted on the magnetic head 34 and reading the data of the card 21 by the magnetic head 34 in a period of a specific frequency while changing the frequency of the interfering magnetic field, a measure against skimming similar to that in the first embodiment can be performed. Since the interfering magnetic field always acts on the magnetic head 34, a measure against an illegal act can be performed more reliably.

### (Fourth example)

Next, a fourth example of the present invention will be described. Note that, a configuration of a card reader in the fourth example is the same as that in Fig. 1 and Figs. 2a to 2d, and therefore, the description thereof will not be given.

In the present embodiment, the loop antenna 35 always generates an interfering magnetic field having a random frequency (first frequency) and, when insertion of the magnetic card 21 is detected, switches the random frequency to the constant frequency (second frequency).

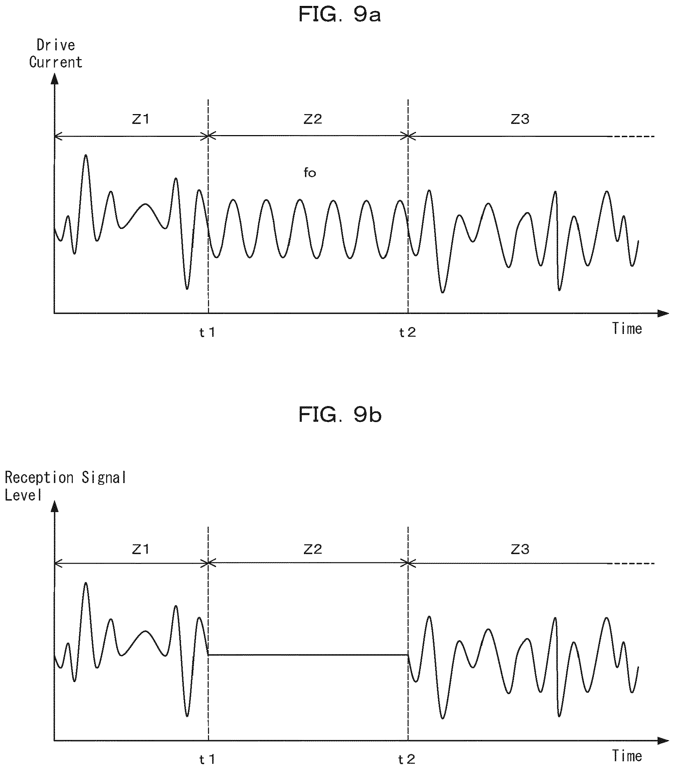

Concretely, as illustrated in Fig. 9a, in the period Z1 until timing t1 at which insertion of the card 21 is detected, based on control of the magnetic field control unit 9, the drive current having the random frequency flows in the loop antenna 35, and the loop antenna 35 generates the interfering magnetic field having the random frequency. Then, when insertion of the card 21 is detected by the card insertion detection sensor 23 at the timing t1, based on the control of the magnetic field control unit 9, the frequency of the drive current flowing in the loop antenna 35 is switched from the random frequency to the constant frequency fo, and the loop antenna 35 generates the interfering magnetic field having the constant frequency fo for the predetermined period Z2.

In the period Z2 in which the frequency of the interfering magnetic field is constant, the magnetic stripe detecting unit 10 reads data recorded in the magnetic stripe 21a of the card 21 by the magnetic head 34. The magnetic stripe detecting unit 10 then performs a filtering process for eliminating the signal having the frequency fo on the read data and outputs a signal after the filtering as a magnetic stripe detection signal. As a result, from the magnetic stripe detecting unit 10, a signal obtained by eliminating the signal having the frequency fo in the period Z2 as illustrated in Fig. 9b is output.

When the detection of a magnetic stripe by the magnetic stripe detecting unit 10 is finished at timing t2, based on the control of the magnetic field control unit 9, the frequency of the drive current flowing in the loop antenna 35 switches from the constant frequency fo to the random frequency. In the following period Z3, the interfering magnetic field having random frequency is generated again from the loop antenna 35.

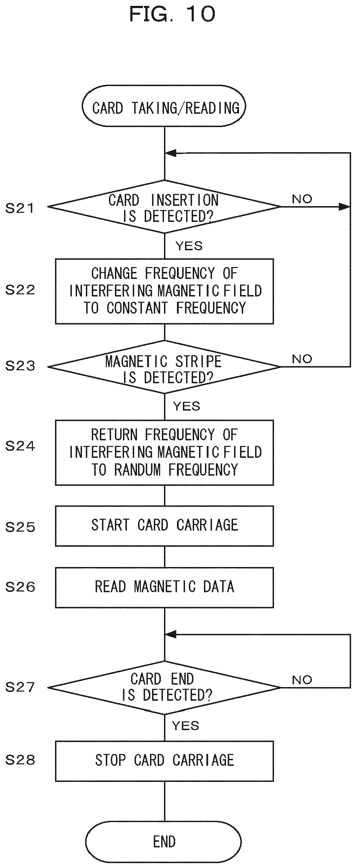

Fig. 10 illustrates the procedure in the case of performing take-in and reading of the card 21 in the fourth example. The process in each of steps is executed by the control unit 2.

First, the control unit 2 determines whether or not insertion of the card 21 is detected by the card insertion detection sensor 23 (step S21). When insertion of the card 21 is not detected (NO in step S21), the control unit 2 repeatedly executes step S21 and waits until insertion of the card 21 is detected. When insertion of the card 21 is detected (YES in step S21), the magnetic field control unit 9 controls the magnetic field generating unit 8 to change the frequency of the interfering magnetic field generated by the loop antenna 35 from random frequency to constant frequency (stepS22) . Moreover, from this time point, the magnetic stripe detecting unit 10 starts detection of a magnetic stripe.

Next, the control unit 2 determines whether or not a magnetic stripe is detected by the magnetic stripe detecting unit 10, that is, whether or not magnetic data is read from the magnetic stripe 21a of the card 21 by the magnetic head 34 for detecting a magnetic stripe (step S23). When no magnetic stripe is detected (NO in step S23), the control unit 2 determines that the card 21 is not a magnetic card or is a magnetic card in which no data is recorded in a magnetic stripe, and returns to step S21.

When a magnetic stripe is detected (YES in step S23), the magnetic field control unit 9 controls the magnetic field generating unit 8 to return the frequency of the interfering magnetic field generated by the loop antenna 35 to random frequency (step S24). The control unit 2 determines that the card 21 in which magnetic data is recorded is inserted and rotates the carrier rollers 25 to 28 in the forward direction by the card carriage control unit 12 to start carriage of the card 21 (step S25). Thus, the card 21 passes through the carrier path P and is taken in the casing 100. In the process that the card 21 is carried in the carrier path P, magnetic data recorded in the magnetic stripe 21a of the card 21 is read by the magnetic head 29 (step S26).

Subsequently, the control unit 2 determines whether or not the sensor 33 disposed next to the carrier roller 28 detects the end (the right end in Fig. 2a) of the card 21 (step S27). When the sensor 33 does not detect the card end (NO in step S27), the control unit 2 repeatedly executes the step S27. Specifically, the control unit 2 rotates the carrier rollers 25 to 28 in the forward direction and continues carriage of the card 21 until the card end is detected. When the sensor 33 detects the card end (YES in step S27), the control unit 2 determines that the carried card 21 has reached the rear end of the carrier path P and stops the rotation of the carrier rollers 25 to 28 by the card carriage control unit 12 to cease carrying the card 21 (step S28). At this time, the card 21 is temporarily stored in the storage part (not illustrated) . Thus, the series of all of processes of Fig. 10 is finished. Note that, the operation at the time of returning the card is the same as that in Fig. 5, and therefore, the description thereof will not be given.

Also in the fourth embodiment, in a manner similar to the third example, since the interfering magnetic field generated by the loop antenna 35 always acts on the magnetic head 34, even if the skimming of the second type of coupling a lead wire to the output terminal of the magnetic stripe detecting unit 10 and reading magnetic data of the card 21 by an illegal reader via the lead wire is performed, the magnetic data of the card 21 cannot be taken.

On the other hand, in the period Z2 in which the frequency of the interfering magnetic field is constant, a signal output from the magnetic stripe detecting unit 10 becomes different from that of original data recorded in the card 21 by the filtering process. However, in a manner similar to the third example, if magnetic data is recorded in the magnetic stripe 21a, the magnetic head 34 reads the data. As a result, in the period Z2, a signal which does not include the frequency fo is output from the magnetic stripe detecting unit 10. Hence, by this signal, the existence of magnetic data can be determined. Since the above signal is a signal by which only determination of the existence of data in the magnetic stripe 21a can be performed, even if the signal is read in the period Z2 by the skimming of the second type, the original data cannot be reproduced.

As described above, in the fourth example, by normally making the interfering magnetic field having random frequency acted on the magnetic head 34, on detection of insertion of the card 21, setting the frequency of the interfering magnetic field to the constant frequency fo, and reading the data of the card 21 by the magnetic head 34, a measure against skimming similar to that in the first embodiment can be performed. Since the interfering magnetic field always acts on the magnetic head 34, a measure against an illegal act can be performed more reliably.

### (Fifth example)

Next, a fifth example of the present invention will be described. Note that, the configuration of a card reader in the fifth example is the same as that in Fig. 1 and Figs. 2a to 2d, and therefore, the description thereof will not be given. Also, the basic operation of the card reader is the same as that in Figs. 4 and 5, and therefore, the description thereof will not be given.

In the foregoing first embodiment to fourth example, the interfering magnetic field generated by the loop antenna 35 is changed only in a specific period to a state different from that in the other period. In the fifth example, without changing the state of the interfering magnetic field, the magnetic stripe detecting unit 10 performs a filtering process for eliminating a signal having a frequency which is in the same band as that of the frequency of the interfering magnetic field on data read from the magnetic stripe 21a by the magnetic head 34. The detailed description will be given below.

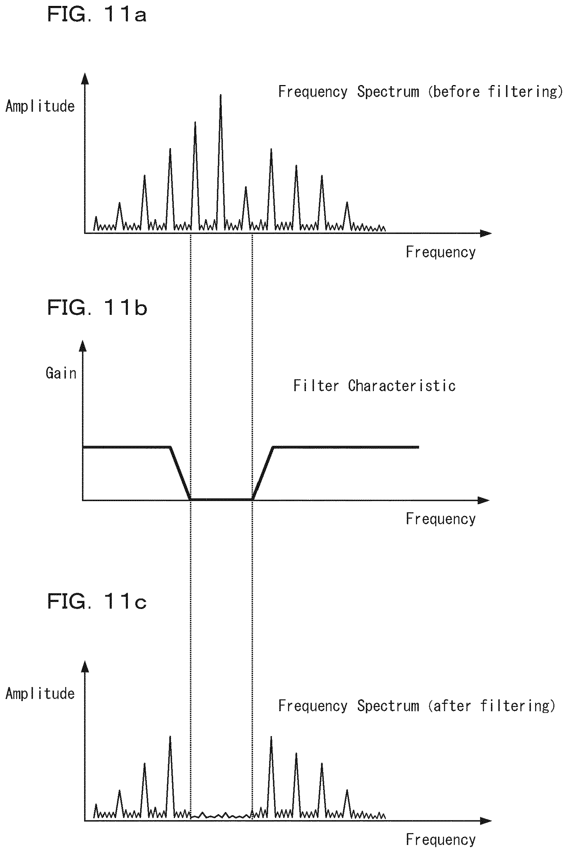

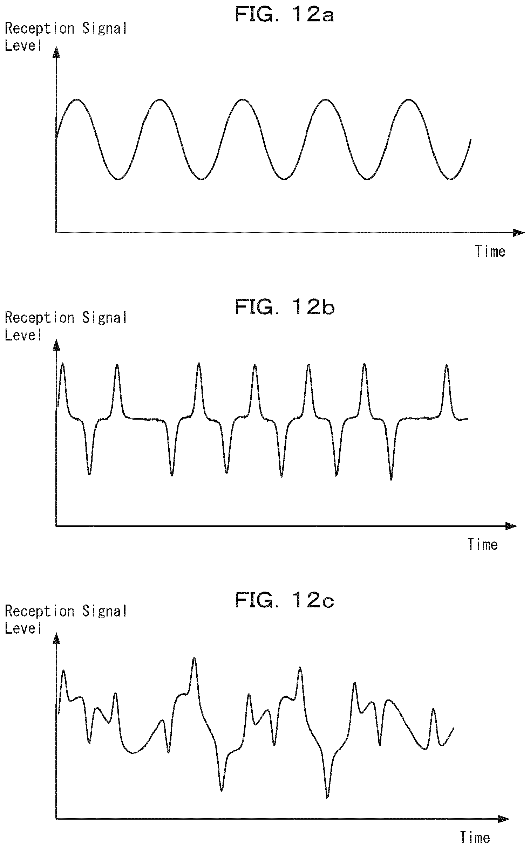

Fig. 11a illustrates the frequency spectrum of a reception signal in the magnetic stripe detecting unit 10 in the case of superimposing the interfering magnetic field of the loop antenna 35 on magnetic data of the card 21 and reading the resultant by the magnetic head 34. Assume that a reception signal in a state where only the interfering magnetic field exists and no magnetic data exists is a signal as illustrated in Fig. 12a, and a reception signal in a state where the interfering magnetic field does not exist and only magnetic data exists is a signal as illustrated in Fig. 12b. A reception signal of the magnetic stripe detecting unit 10 in a state where the interfering magnetic field is superimposed on magnetic data will be a signal as illustrated in Fig. 12c, which is obtained by combining the signal of Fig. 12a and the signal of Fig. 12b. Consequently, the reception signal includes a wide frequency component as illustrated in Fig. 11a.

Fig. 11b illustrates the characteristic of a filter provided for the magnetic stripe detecting unit 10. The filter eliminates a specific frequency component, that is, a frequency component in the same band as that of the frequency of the interfering magnetic field from the reception signal having the frequency spectrum of Fig. 11a. Fig. 11c illustrates the frequency spectrum obtained by performing a filtering process on the reception signal of the magnetic stripe detecting unit 10 by a filter having the characteristic of Fig. 11b. As understood from Fig. 11c, a part of the frequency component in the same band as that of the interfering magnetic field is eliminated from the reception signal by the filtering process.

Also in the fifth example, in a manner similar to the third and fourth examples, since the interfering magnetic field generated by the loop antenna 35 always acts on the magnetic head 34, even if the skimming of the second type of coupling a lead wire to the output terminal of the magnetic stripe detecting unit 10 and reading magnetic data of the card 21 by an illegal reader via the lead wire is performed, the magnetic data of the card 21 cannot be taken.

On the other hand, due to the filtering process described above, in the magnetic stripe detecting unit 10, a part of the magnetic data of the card 21 is lost from the reception signal. However, since the frequency of the reception signal lies in a wide range as illustrated in Fig. 11a, all of the magnetic data is not lost. Therefore, by a signal output from the magnetic stripe detecting unit 10 based on residual data, the existence of magnetic data can be determined. Since the output signal is a signal by which only determination of the existence of data in the magnetic stripe 21a can be performed, even if the signal is read by the skimming of the second type, the original data cannot be reproduced.

As described above, in the fifth example, by making the interfering magnetic field acted on the magnetic head 34 and performing a filtering process for eliminating a frequency component which is in the same band as that of the frequency of the interfering magnetic field on a reception signal of the magnetic stripe detecting unit 10, a measure against skimming similar to that of the first embodiment can be performed. Further, since the interfering magnetic field always acts on the magnetic head 34, a measure against an illegal act can be performed more reliably. Moreover, since the state of the interfering magnetic field is not changed, the control in the magnetic field control unit 9 is simplified.

### (Sixth example)

Next, a sixth example of the present invention will be described. Note that, the configuration of a card reader in the sixth example is the same as that in Fig. 1 and Figs. 2a to 2d, and therefore, the description thereof will not be given. Also, the basic operation of the card reader is the same as that in Figs. 4 and 5, and therefore, the description thereof will not be given.

In the sixth example, without changing the state of the interfering magnetic field, magnetic stripe detection is performed by monitoring whether or not the frequency of a detection signal output from the magnetic stripe detecting unit 10 shifts with respect to the frequency of the interfering magnetic field. The detailed description will be given below.

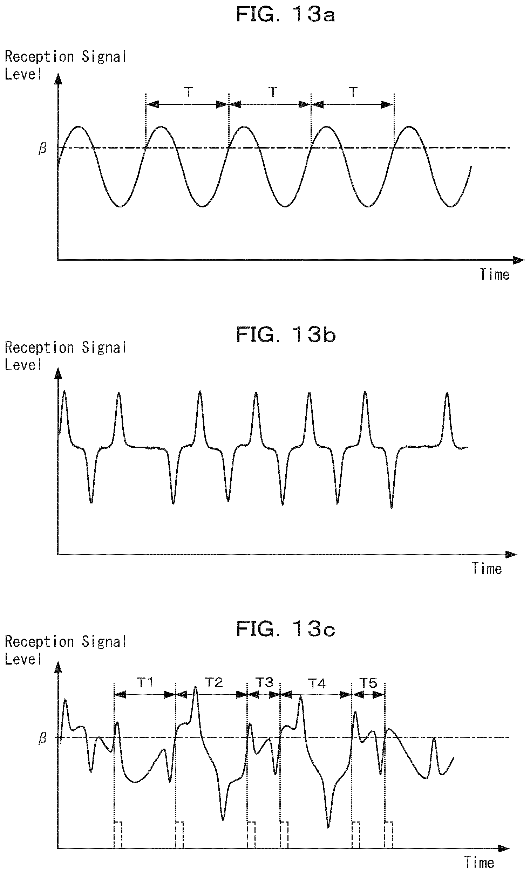

Figs. 13a to 13c illustrate the waveforms of the reception signals of the magnetic stripe detecting unit 10. Fig. 13a is the waveform of a reception signal by the interfering magnetic field, Fig. 13b is the waveform of a reception signal by magnetic data of the card 21, and Fig. 13c is the waveform of a reception signal in a state where the interfering magnetic field is superimposed on magnetic data. Figs. 13a to 13c are similar to Figs. 12a to 12c, respectively.

As illustrated in Fig. 13a, a predetermined threshold β is set with respect to the level of a reception signal by the interfering magnetic field. In a state where the magnetic card 21 is not inserted, the control unit 2 detects time T from the rising edge of a reception signal to the next rising edge thereof at the threshold β. The time T corresponds to the frequency of the interfering magnetic field generated by the loop antenna 35 and is constant.

As illustrated in Fig. 13c, the same threshold β is set for a reception signal in a state where the interfering magnetic field is superimposed on magnetic data. When the magnetic card 21 is inserted and the magnetic stripe 21a is detected in a state where the interfering magnetic field is generated, the signal of Fig. 13c is output as a detection signal from the magnetic stripe detecting unit 10. The control unit 2 detects time from the rising edge of a reception signal at the threshold β to the next rising edge thereof. The time corresponds to the frequency of the detection signal and varies like T1 to T5. That is, the frequency of the detection signal shifts from the frequency of the interfering magnetic field.

Based on the time T detected in Fig. 13a and the times T1 to T5 detected in Fig. 13c, the control unit 2 then determines whether or not the frequency of the detection signal output from the magnetic stripe detecting unit 10 shifts from the frequency of the interfering magnetic field and, in the case where the frequency of the detection signal shifts, determines that the magnetic card 21 in which magnetic data is recorded in the magnetic stripe 21a is inserted.

Note that, in the present example, although the magnetic stripe detecting unit 10 outputs the signal of Fig. 13c as it is as a detection signal, the magnetic stripe detecting unit 10 may generate a pulse signal (indicated by broken line) at the rising edge of a reception signal at the threshold β and output the pulse signal to the control unit 2 as the detection signal.

Also in the sixth example, since the interfering magnetic field generated by the loop antenna 35 always acts on the magnetic head 34, even if the skimming of the second type of coupling a lead wire to the output terminal of the magnetic stripe detecting unit 10 and reading magnetic data of the card 21 by an illegal reader via the lead wire is performed, the magnetic data of the card 21 cannot be taken.

On the other hand, although a detection signal output from the magnetic stripe detecting unit 10 becomes different from that of original data recorded in the card 21, the existence of magnetic data can be determined by detecting the frequency fluctuation as described above. Since this detection signal is a signal by which only determination of the existence of data in the magnetic stripe 21a can be performed, even if the signal is read by the skimming of the second type, the original data cannot be reproduced.

As described above, in the sixth example, by making the interfering magnetic field acted on the magnetic head 34 and performing the magnetic stripe detection based on a fluctuation in the frequency of the output signal of the magnetic stripe detecting unit 10 with respect to the frequency of the interfering magnetic field, a measure against skimming similar to that in the first embodiment can be performed. Since the interfering magnetic field always acts on the magnetic head 34, a measure against an illegal act can be performed more reliably. Further, since the state of the interfering magnetic field is not changed, in amanner similar to the case of the fifth example, the control in the magnetic field control unit 9 is simplified.

In each of the foregoing first embodiment and examples, a measure against skimming in the case where the card 21 is inserted was described. On the other hand, as a measure against skimming in the case where the card 21 is returned, it is sufficient to continuously generate the interfering magnetic field from the loop antenna 35. The reason is that the magnetic stripe detection is performed to open a shutter (not illustrated) of the insertion port 22 at the time of insertion of the card 21 but is not performed when the card 21 is returned, so that it is unnecessary to control pause or the like of the interfering magnetic field.

In each of the foregoing first embodiment and examples, a measure against skimming to the magnetic head 34 for detecting a magnetic stripe was described. On the other hand, in the casing 100 of the card reader 1, the magnetic head 29 for reading the magnetic stripe 21a and reproducing the data exists (see Fig. 2a). As a measure against skimming to the magnetic head 29, for example, a measure of encrypting data read by the magnetic head 29 or the like is taken.

In each of the foregoing first embodiment and examples, an example of disposing one loop antenna 35 so as to surround the insertion port 22 as illustrated in Fig. 2b was mentioned. In place of this, as illustrated in Fig. 2c, two independent loop antennas 35a and 35b may be disposed on both sides of the insertion port 22. The number of loop antennas may be three or more. In the case of providing a plurality of loop antennas, a stronger interfering magnetic field can be generated as compared with the case of providing a single loop antenna, so that skimming can be prevented more effectively. Interfering magnetic fields of different frequencies may be generated by a plurality of loop antennas. In such a manner, the interfering magnetic fields acting on an illegal reader have a plurality of frequency components, so that it becomes difficult to eliminate the interfering magnetic fields even by performing a filtering process and illegal data acquisition can be prevented more reliably. Further, as illustrated in Fig. 2d, a single loop antenna 35c may be disposed only near the magnetic head 34 for detecting a magnetic stripe (Fig. 2a).

By disposing a core made of metal such as ferrite or iron having high magnetic permeability for the loop antenna, the magnetic field can have directivity or a stronger interfering magnetic field can be generated.

In each of the foregoing first embodiment and examples, as a magnetic recording medium, the magnetic card having the magnetic stripe on its rear surface was described as an example. However, the present invention can be also applied to a magnetic recording medium reading device handling a magnetic card having a magnetic stripe on the surface or both surface and rear surface.

In each of the foregoing first embodiment and examples, a magnetic card was described as a magnetic recording medium. However, the present invention can be also applied to a device for reading, not limited to a magnetic card but, a magnetic recording medium such as a passbook having a magnetic stripe.

### Industrial Applicability

The present invention can be applied to devices for reading a magnetic recording medium such as a card reader and a passbook reader installed on an automatic transaction processing device such as an ATM, or a card reader installed in a card verifying terminal.

### Reference Signs List

- 1: card reader
- 2: control unit
- 8: magnetic field generating unit
- 9: magnetic field control unit
- 10: magnetic stripe detecting unit
- 21: magnetic card
- 21a: magnetic stripe
- 22: insertion port
- 34: magnetic head
- 35: loop antenna

## Claims

1. A magnetic recording medium reading device (1) comprising:
an insertion port (22) in which a magnetic recording medium (21) is to be inserted;
a magnetic stripe detecting unit (10) including a magnetic head (34) that detects a magnetic stripe (21a) of the magnetic recording medium (21);
a magnetic field generating unit (8) that generates an interfering magnetic field to disturb reading of data recorded in the magnetic stripe (21a) of the magnetic recording medium (21); and
a control unit (2) that determines the existence of data recorded in the magnetic stripe (21a) based on a detection signal output from the magnetic stripe detecting unit (10),wherein
the magnetic field generating unit (8) is provided near the insertion port (22) and makes the interfering magnetic field acted on the magnetic head (34) while changing the interfering magnetic field only for a specific period to a state different from that in the other period, and **characterised in that**:
in the case where the magnetic field generating unit (8) generates an interfering magnetic field and the magnetic recording medium (21) is inserted through the insertion port (22), the magnetic stripe detecting unit (10), in the specific period, reads a very small part of the data in the magnetic stripe (21a) by the magnetic head (34) and outputs a detection signal by which the data recorded in the magnetic stripe (21a) can not be completely reproduced but only determination of the existence of data recorded in the magnetic stripe (21a) can be performed,
wherein the specific period is a pause period in which the interfering magnetic field pauses.

2. The magnetic recording medium reading device (1) according to claim 1, wherein the magnetic field generating unit (8) is provided closer to the insertion port (22) side than the magnetic head (34) in an insertion direction of the magnetic recording medium (21).

3. The magnetic recording medium reading device (1) according to claim 2, wherein the control unit (2) determines whether or not the interfering magnetic field generated by the magnetic field generating unit (8) is normally received by the magnetic head (34) based on a level of a signal output from the magnetic stripe detecting unit (10) in a period other than the pause period.

## Patentansprüche

1. Lesevorrichtung (1) für ein magnetisches Aufzeichnungsmedium, die Folgendes umfasst:
eine Einführöffnung (22), in die ein magnetisches Aufzeichnungsmedium (21) einzuführen ist;
eine Magnetstreifen-Detektionseinheit (10), die einen Magnetkopf (34) enthält, der einen Magnetstreifen (21a) des magnetischen Aufzeichnungsmediums (21) detektiert;
eine Magnetfeld-Erzeugungseinheit (8), die ein Störmagnetfeld erzeugt, um das Auslesen der Daten, die in dem Magnetstreifen (21a) des magnetischen Aufzeichnungsmediums (21) aufgezeichnet sind, zu stören: und
eine Steuereinheit (2), die basierend auf einem Detektionssignal, das von der Magnetstreifen-Detektionseinheit (10) ausgegeben wird, die Existenz von Daten bestimmt, die in dem Magnetstreifen (21a) aufgezeichnet sind, wobei
die Magnetfeld-Erzeugungseinheit (8) in der Nähe der Einführöffnung (22) vorgesehen ist und das auf den Magnetkopf (34) wirkende Störmagnetfeld erzeugt, wobei sie das Störmagnetfeld nur für eine bestimmte Periode zu einem Zustand ändert, der sich von dem in der anderen Periode unterscheidet, und **dadurch gekennzeichnet, dass**:
in dem Fall, in dem die Magnetfeld-Erzeugungseinheit (8) ein Störmagnetfeld erzeugt und das magnetische Aufzeichnungsmedium (21) durch die Einführöffnung (22) eingeführt wird, die Magnetstreifen-Detektionseinheit (10) in der bestimmten Periode, einen sehr kleinen Teil der Daten in dem Magnetstreifen (21a) durch den Magnetkopf (34) ausliest und ein Detektionssignal ausgibt, durch das die Daten, die in dem Magnetstreifen (21a) aufgezeichnet sind, nicht vollständig reproduziert werden können, sondern nur eine Bestimmung der Existenz von Daten, die in dem Magnetstreifen (21a) aufgezeichnet sind, durchgeführt werden kann,
wobei die bestimmte Periode einer Pauseperiode entspricht, in der das Störmagnetfeld pausiert.

2. Lesevorrichtung (1) für ein magnetisches Aufzeichnungsmedium nach Anspruch 1, wobei die Magnetfeld-Erzeugungseinheit (8) in einer Einführrichtung des magnetischen Aufzeichnungsmediums (21) näher zu der Seite der Einführöffnung (22) vorgesehen ist als das Magnetkopf (34).

3. Lesevorrichtung (1) für ein magnetisches Aufzeichnungsmedium nach Anspruch 2, wobei die Steuereinheit (2) basierend auf einem Niveau eines Signals, das von der Magnetstreifen-Detektionseinheit (10) in einer anderen Periode als der Pauseperiode ausgegeben wird, bestimmt, ob das von der Magnetfeld-Erzeugungseinheit (8) erzeugte Störmagnetfeld von dem Magnetkopf (34) normal empfangen wird oder nicht.

## Revendications

1. Dispositif de lecture de support d'enregistrement magnétique (1) comprenant :
un orifice d'introduction (22) dans lequel un support d'enregistrement magnétique (21) doit être introduit ;
une unité de détection de ruban magnétique (10) incluant une tête magnétique (34) qui détecte un ruban magnétique (21a) du support d'enregistrement magnétique (21) ;
une unité de génération de champ magnétique (8) qui génère un champ magnétique d'interférence pour perturber la lecture des données enregistrées dans le ruban magnétique (21a) du support d'enregistrement magnétique (21) ; et
une unité de commande (2) qui détermine l'existence de données enregistrées dans le ruban magnétique (21a) sur la base d'un signal de détection délivré depuis l'unité de détection de ruban magnétique (10), dans lequel
l'unité de génération de champ magnétique (8) est prévue proche de l'orifice d'introduction (22) et produit le champ magnétique d'interférence agissant sur la tête magnétique (34) tout en changeant le champ magnétique d'interférence uniquement pendant une période spécifique vers un état différent de celui dans l'autre période, et
**caractérisé en ce que** :
dans le cas où l'unité de génération de champ magnétique (8) génère un champ magnétique d'interférence et le support d'enregistrement magnétique (21) est introduit à travers l'orifice d'introduction (22), l'unité de détection de ruban magnétique (10), dans la période spécifique, lit une très petite partie des données dans le ruban magnétique (21a) par la tête magnétique (34) et délivre un signal de détection au moyen duquel les données enregistrées dans le ruban magnétique (21a) ne peuvent pas être complètement reproduites mais qu'il est possible d'effectuer uniquement une détermination de l'existence de données enregistrées dans le ruban magnétique (21a),
dans lequel la période spécifique est une période de pause dans laquelle le champ magnétique interférence fait une pause.

2. Dispositif de lecture de support d'enregistrement magnétique (1) selon la revendication 1, dans lequel l'unité de génération de champ magnétique (8) est prévue plus proche du côté de l'orifice d'introduction (22) que la tête magnétique (34) dans une direction d'introduction du support d'enregistrement magnétique (21).

3. Dispositif de lecture de support d'enregistrement magnétique (1) selon la revendication 2, dans lequel l'unité de commande (2) détermine quant à savoir si le champ magnétique interférence généré par l'unité de génération de champ magnétique (8) est ou non normalement reçu par la tête magnétique (34) sur la base d'un niveau d'un signal délivré depuis l'unité de détection de ruban magnétique (10) dans une période autre que la période de pause.
